(19) Europäisches Patentamt
European Patent Office
Office européen des brevets

(11) EP 3 382 367 A1

(12) EUROPEAN PATENT APPLICATION

(43) Date of publication:
03.10.2018 Bulletin 2018/40

(51) Int Cl.:
G01N 1/22 (2006.01)     G01N 15/06 (2006.01)
G01N 15/00 (2006.01)

(21) Application number: 17163753.1

(22) Date of filing: 30.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Koninklijke Philips N.V.
5656 AE Eindhoven (NL)

(72) Inventors:
• ZHANG, Peng
  5656 AE Eindhoven (NL)
• CHEN, Weizhong
  5656 AE Eindhoven (NL)
• SHI, Jun
  5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) FANLESS AIRBORNE POLLUTANT SENSING

(57) A sensor device (10) for determining a concentration of an airborne pollutant without the need to control or measure an airflow speed through the sensor device is disclosed. The sensor device comprises a first flow channel (20) having a first inlet (21) and a first outlet (23); a first airborne pollutant sensor (22) in the first flow channel; a second flow channel (30) having a second inlet (31) and a second outlet (33); a second airborne pollutant sensor (32) in the second flow channel, wherein the first inlet has a first area and the second inlet has a second area, and wherein a ratio between the first area and the second area is larger than 1.5. A method of determining a concentration of an airborne pollutant with such a sensor device (10) is also disclosed.

FIG. 1

**Description**

FIELD OF THE INVENTION

The present invention relates to a sensor device for determining a concentration of an airborne pollutant, comprising a flow channel having an inlet and an outlet, with an airborne pollutant sensor in the flow channel.
The present invention further relates to a method of determining an airborne pollutant concentration with such a sensor device.

BACKGROUND OF THE INVENTION

With increasing concerns over the adverse health effects of air pollution e.g. PM2.5 (particles smaller than 2.5 $\mu$m diameter range) on human health, the demand for pollution information of living spaces is continuously increasing. For example, in some developing countries such as China and India, severe PM2.5 pollution has become a common problem over the last decade. This has caused people to become increasingly interested in obtaining environmental pollution levels, which interest has led to an increased interest in sensor devices for airborne pollutants, e.g. particle sensor devices, which sensor devices may be integrated in consumer electronic devices such as smart phones or other smart devices or may be provided as discrete (wearable) sensor devices.
Most airborne pollutant sensor devices such as particle sensors use a light scattering principle to measure the particle concentration. Light scattering can be induced when particles go through a sensing area of the particle sensor device, where the scattered light is detected and transformed into electrical signals, which may be amplified and processed. The number and diameter of particles can be obtained by analysis of such electrical signals due to the fact that the number of the signals can be correlated to the number of the particles in the sensing area, with the signal waveform containing information regarding the particle's diameter.
Different types of light scattering based sensor are known. One known principle is a LED based sensor as for example disclosed in JP2008145353A and CN104089858A. Another known principle is a laser-based sensor, for example, a laser-based PM2.5 detector used to detect atmospheric particles having a size (diameter) of less than 2.5 $\mu$m, as for example disclosed in CN203551443U, CN203824872U and CN105021501A. The basic principle of such a laser-based PM2.5 detector is that the laser scattering by the particles maybe detected with an optical sensor arranged to produce a pulse signal output, which may be converted into a digital signal.
The airflow through such a sensor is typically generated by a resistor, fan, pump or the like. In this manner, the airflow speed through the particle sensor device can be accurately controlled, as required for an accurate determination of the particle concentration per unit volume of air. However, such components are relatively costly, which creates undesired upward pressure on the manufacturing cost of such particle sensor devices, in particular where such particle sensor devices are to be deployed in a competitive, small margin, technical field, e.g. electronic devices such as consumer electronic devices. Moreover, such components increase the size of the particle sensor device as well as increase the power consumption of the particle sensor device, which may be undesirable in certain application domains, e.g. wearable devices. In addition, such components generate heat when in use, which may cause temperature fluctuations and associated measurement error in the particle sensor device.
US 2016/0025628 A1 discloses a mobile device which senses particulate matter. The mobile device includes a housing having an airflow path through which airflows when the mobile device is shaken; an inertia sensor that detects acceleration of the mobile device; a light-scattering type sensor that irradiates the airflow path with light and detects particulate matter in air flowing through the airflow path; and a controller that includes a counter for counting the particulate matter detected by the light-scattering type sensor, and a flow rate calculator for detecting an airflow rate of the airflow path based on a detection signal of the inertia sensor. In this manner, an airflow generating component can be avoided. However, this comes at the expense of requiring an inertia sensor instead, which is also costly and hampers miniaturization of a particle sensor device. In addition, such inertia sensors are typically affected by gravity, such that in order to obtain accurate air flow determinations, additional components, e.g. a gyroscope, may be required to estimate the effect of gravity on the inertia sensor such that its reading can be compensated accordingly.

SUMMARY OF THE INVENTION

The present invention seeks to provide a compact fanless sensor device for accurately determining a concentration of an airborne pollutant.
The present invention further seeks to provide a method of accurately determining a concentration of an airborne pollutant with such a sensor device.
According to an aspect, there is provided a sensor device for determining a concentration of an airborne pollutant, comprising a first flow channel having a first inlet and a first outlet; a first airborne pollutant sensor in the first flow channel; a second flow channel having a second inlet and a second outlet; a second airborne pollutant sensor in the second flow channel; wherein the first inlet has a first area and the second inlet has a second area, and wherein a ratio between the first area and the second area is larger than 1.5.

The present invention is based on the insight that a concentration of an airborne pollutant can be accurately determined using a pair of flow channels each comprising a sensor for the pollutant by giving the flow channels differently sized inlets, such that the airflow speed in the respective channels will be different. The associated ratio between these airflow speeds in these flow channels may be used such that the actual concentration of the airborne pollutant can be determined from the respective sensor readings in these flow channels. In order to achieve an acceptable accuracy in an airborne pollutant concentration determined in this manner, the ratio between the first area and the second area should be larger than 1.5, preferably larger than 2.25, more preferably larger than 3. Consequently, the sensor device does not have to contain a fan for regulating an airflow speed through the first flow channel or the second flow channel or flow speed measurement device such as an accelerometer or a flow meter for determining said airflow speed, as the airflow speed in the respective flow channels, which is required to determine the airborne pollutant concentration, can be deduced from the airflow speed-dependent ratio between the sensor readings provided by the first and second airborne pollutant sensors. Consequently, an accurate concentration of the airborne pollutant can be obtained by a user simply by shaking or otherwise moving the sensor device to generate an airflow therethrough.

The first outlet may have a first further area and the second outlet may have a second further area, wherein the ratio between the first area and the second area is the same as a further ratio between the first further area and the second further area in order to ensure the desired airflow speed ratios through the respective flow channels. For this reason, the first outlet preferably further has the same area as the first inlet.

In an embodiment, the sensor device is a self-contained or standalone device adapted to calculate the airborne pollutant concentration from the respective sensor readings of the first and second airborne pollutant sensors. To this end, the sensor device may further comprise a processor communicatively coupled to the first airborne pollutant sensor and the second airborne pollutant sensor, the processor being arranged to determine a concentration of the airborne pollutant from a first sensor reading provided by the first airborne pollutant sensor and a second sensor reading provided by the second airborne pollutant sensor.

The processor may be arranged to determine the concentration of the airborne pollutant based on a preconfigured calibration function, which function for instance may be configured by empirically deriving its parameters using a calibrated sensor for the airborne pollutant to compare the concentration determined with the sensor device using an unconfigured version of the calibration function with the concentration determined with the calibrated sensor and defining the parameters of the calibration function based on the difference between these concentrations.

In an embodiment, the sensor device further comprises a communication module communicatively coupled to the processor and arranged to communicate the determined concentration of the airborne pollutant to an external device. This for example facilitates the recording and/or displaying of the determined concentration of the airborne pollutant on the external device, e.g. a smart phone, tablet computer, laptop computer, personal computer or the like, such that the user of the sensor device may visualize the determined concentration and/or a history of the determined concentrations, e.g. to evaluate a trend in these concentrations, on this external device. This for example is particularly advantageous where the sensor device is to be kept as compact as possible, in which case the omission of a user interface such as a display from the sensor device assists in achieving this objective.

In an alternative embodiment, the sensor device further comprises a communication module communicatively coupled to the first airborne pollutant sensor and the second airborne pollutant sensor, the communication module being arranged to communicate a first sensor reading provided by the first airborne pollutant sensor and a second sensor reading provided by the second airborne pollutant sensor to an external device comprising a processor for determining a concentration of the airborne pollutant from the first sensor reading and the second sensor reading. In this embodiment, the processing of the respective sensor readings is performed on the external device, thus further reducing the footprint and energy consumption of the sensor device, which is particularly advantageous where the sensor device is battery-powered and/or is to be kept as compact as possible.

In an embodiment, the sensor device is a particulate matter sensor device such as a PM 2.5 sensor device, PM 5 sensor device, PM 10 sensor device or a UFP (ultra-fine particle) sensor device. In such a particulate matter sensor device, the first airborne pollutant sensor and the second airborne pollutant sensor may be optical sensors, as such optical sensors are particularly suitable for particulate matter detection and can do so in an energy-efficient manner whilst being compact in size. The sensor device may comprise more than one (optical) sensor in each flow channel, such as for example a combination of particulate matter sensors for determining particles of different sizes.

The sensor device may be a wearable sensor device, such that its user can readily determine the concentration of the airborne pollutant of interest on the move. Alternatively, the sensor device may be a portable sensor device and/or may be integrated in an electronic device such as a smart phone or the like, in which case its user may invoke a sensor reading by shaking or otherwise generating the required airflows through the respective flow channels of the sensor device.

According to another aspect, there is provided a method of determining a concentration of an airborne pollutant with the sensor device of any of the embodiments described in this application, the method comprising shaking the sensor device to generate a first airflow through the first flow channel and a second airflow through the second flow channel; obtaining a first sensor reading provided by the first airborne pollutant sensor in the first flow channel; obtaining a second sensor reading provided by the second airborne pollutant sensor in the second flow channel; and determining a concentration of the airborne pollutant from the first sensor reading and the second sensor reading. With this method, a concentration of the airborne pollutant can be determined in an accurate manner without requiring the explicit determination of the respective airflow speeds through the flow channels of the sensor device.

The method may further comprise communicating the first sensor reading and the second sensor reading to an external device, and determining the concentration of the airborne pollutant from the first sensor reading and the second sensor reading on said external device. Such a distributed approach has the advantage that the energy consumption and size of the sensor device can be effectively minimized.

The determining the concentration of the airborne pollutant from the first sensor reading and the second sensor reading may comprise determining the concentration of the airborne pollutant based on a preconfigured calibration function as explained above.

BRIEF DESCRIPTION OF THE DRAWINGS

Embodiments of the invention are described in more detail and by way of non-limiting examples with reference to the accompanying drawings, wherein:

FIG. 1 schematically depicts an airborne pollutant sensor according to an embodiment;
FIG. 2 schematically depicts an airborne pollutant sensor according to another embodiment;
FIG. 3 schematically depicts an airborne pollutant sensor according to yet another embodiment; and
FIG. 4 depicts a flowchart of an airborne pollutant concentration measurement method according to an example embodiment.

DETAILED DESCRIPTION OF THE EMBODIMENTS

It should be understood that the Figures are merely schematic and are not drawn to scale. It should also be understood that the same reference numerals are used throughout the Figures to indicate the same or similar parts.

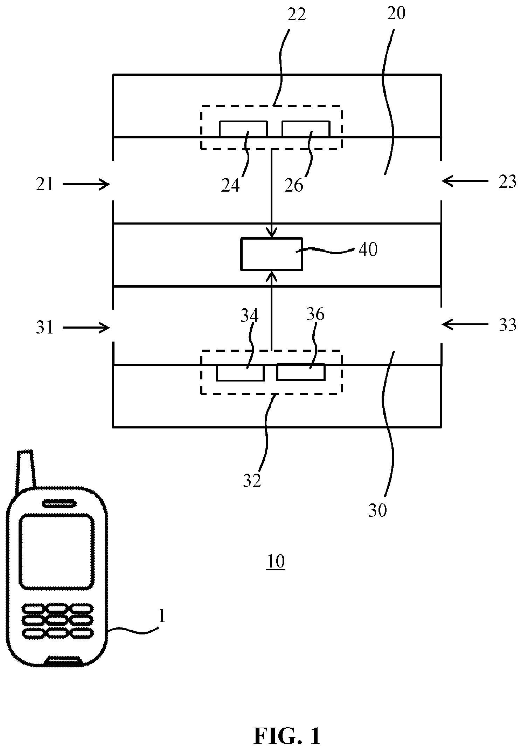

FIG. 1 schematically depicts a sensor device 10 according to an embodiment of the present invention. The sensor device 10 comprises a first flow channel 20 comprising a first inlet 21 and a first outlet 23. A first airborne pollutant sensor 22 is located in the first flow channel 20. The sensor device 10 further comprises a second flow channel 30 comprising a second inlet 31 and a second outlet 33. A second airborne pollutant sensor 32 is located in the second flow channel 30. The first airborne pollutant sensor 22 and the second airborne pollutant sensor 32 typically are configured to sense the same airborne pollutant, such as an airborne particle of a certain size. In other words, the first airborne pollutant sensor 22 and the second airborne pollutant sensor 32 may be particulate matter sensors such as PM 2.5 sensors, PM 5 sensors, PM 10 sensors or UFP sensors. As is well-known per se, the numerical value following the acronym PM indicates particles having a diameter of said numerical value or less. So for example, PM 2.5 refers to airborne particles having a diameter of 2.5 microns or less. It is noted for the avoidance of doubt that such particles are not necessarily spherical, in which case the term diameter refers to the largest cross-section of such particles. In a preferred embodiment, the first airborne pollutant sensor 22 and the second and born pollutant sensor 32 are PM 2.5 sensors. The first flow channel 20 and the second flow channel 30 each may comprise more than one sensor. For example, each flow channel may comprise multiple particulate matter sensors such that the concentration of particles of different sizes maybe determined with the sensor device 10.

The first airborne pollutant sensor 22 may be an optical sensor comprising a light source 24 such as a light emitting diode or a laser and a photodetector 26. Similarly, the second airborne pollutant sensor 32 may be an optical sensor comprising a light source 34 such as a light emitting diode or a laser and a photodetector 36. Such optical sensors are particularly suitable for the detection of particulate matter in the respective flow channels 20, 30. Such optical sensors typically operate according to the principle that the light source emits light into the flow channel, with the photodetector counting the number of reflections of the emitted light by the airborne pollutant of interest, e.g. particulate matter of a certain size, over a defined period of time, such that the concentration of the airborne pollutant can be determined based on a known volume of the flow channel, the actual airflow speed through the flow channel and the number of counts in the defined period of time, as is well-known per se and will therefore not be explained in further detail for the sake of brevity only. It is noted that instead of two separate light sources 24, 34, the sensor device 10 may comprise a single light source arranged to emit light into both flow channels 20, 30, with separate detectors 26, 36 arranged in the respective flow channels 20, 30.

In order to obtain the actual airflow speed, prior art sensor devices typically comprise a fan arranged to generate a known fixed airflow speed through the flow channel during measurement, such that the airborne pollutant concentration can be calculated using this known fixed airflow speed. Alternatively, such prior art sensor devices contain an airflow measurement device such as a flow meter or an accelerometer to obtain the actual airflow speed through the flow channel to facilitate the determination of this concentration. In contrast, the present invention is based on the insight that the sensor device 10 does not need to contain either a flow regulating device such as a fan or an airflow measurement device such as a flow meter or accelerometer in order to facilitate the accurate determination of the concentration of the airborne pollutant with the sensors 22, 32. Instead, it has been realized that if the first inlet 21 of the first flow channel 20 is dimensioned differently to the second inlet 31 of the second flow channel 30, different airflow speeds are generated through these respective flow channels, which ratio between these airflow speeds and the associated ratio between the respective sensor readings of the first sensor 22 and the second sensor 32 in the first flow channel 20 and the second flow channel 30, can be used to determine the concentration of the airborne pollutant in the air passing through the sensor device 10. This will be explained in further detail below using PM 2.5 as a non-limiting example of an airborne pollutant of interest. In the following, the area of the first inlet 21 is labeled Sa and the area of the second inlet 31 is labeled Sb.

The actual PM 2.5 concentration (P) in air passing through the sensor device 10 can be expressed as a function of the airflow speed (V) and the PM mass related count (N):

$$P = F(V, N) \tag{1}$$

If it is assumed that the sensor device 10 is shaken at the velocity V, in the first flow channel 20 the detected count can be expressed as N1 and the air flow rate in the detection zone in this flow channel including the sensor 22 can be expressed as Vz1, such that:

$$P = F(Vz1, N1) \tag{2}$$

When considering the mass conservation equation of the air flow in a channel, this yields:

$$\rho \times Sa \times V = \rho \times Sz \times Vz1 \tag{3}$$

In which p is the air density. Equation (3) demonstrates that the mass of air flowing into the first flow channel 20 through first inlet 21 must be equal to the mass of air flowing out of the detection zone of the first flow channel 20. In other words, air cannot be generated or eliminated in this scenario as assuming air temperature/density does not change.

In the second flow channel 30 the detected count can be expressed as N2 and the air flow rate in the detection zone in this flow channel including the sensor 32 can be expressed as Vz2, such that:

$$P = f(Vz2, N2) \tag{4}$$

When considering the continuity equation again, this yields:

$$\rho \times Sb \times V = \rho \times Sz \times Vz2 \tag{5}$$

In the sensor device 10 according to embodiments of the present invention, the respective areas Sa and Sb of the first inlet 21 and the second inlet 31 are chosen to be different, which maybe expressed as:

$$Sa = e \times Sb \tag{6}$$

In equation (6), e is a constant defining the ratio between the respective areas Sa and Sb. The constant e preferably is chosen such that this ratio is more than 1.5, preferably more than 2.25, more preferably more than 3 in order to increase the accuracy of the sensor device 10 as will be demonstrated in more detail below. Equation (6) may be used to approximate equation (4) as follows:

$$P = f(Vz1/e, N2) \qquad (7)$$

Since N1 and N2 are known, this yields 2 equations with 2 unknown variables P and Vz1 as follows:

$$P = f(Vz1, N1) \qquad (8)$$

$$P = f(Vz1/e, N2) \qquad (9)$$

By solving equations (8) and (9), it is possible to obtain the actual PM 2.5 concentration (P), or any other airborne pollutant concentration, without requiring knowledge of the actual (shaking) velocity of the sensor device 10 used to generate an airflow through the sensor device 10. The functions in equations (8) and (9) maybe expressed as follows:

$$P = \frac{a+b*N1}{c+d*V1} \qquad (10)$$

$$P = \frac{a+b*N2}{c+d*V2} \qquad (11)$$

In which the following approximation may be used:

$$e = \frac{V1}{V2} \qquad (12)$$

Based on equations (10)-(12), the calculated PM 2.5 value P maybe approximated as:

$$P = \frac{a+b*N1-e*(a+b*N2)}{c*(1-e)} \qquad (13)$$

Form equations (10)-(13), it can be seen that the ratio between the readings obtained from the respective sensors 22, 32 will vary as a function of the respective airflow speeds through the first flow channel 20 and the second flow channel 30 due to the flow-independent offset parameters a and c, which forms the basis for the ability to determine the actual concentration P of the airborne pollutant of interest, as will be readily understood by the skilled person.

Equation (13) is a configurable calibration function that may be deployed to determine P from the particle counts N1 and N2 as obtained with the sensors 22 and 32 in the first flow channel 20 and the second flow channel 30 respectively. The parameters a, b and c (and d if desired although d is factored out in the final calibration function expressed in equation (13)) in equations (10) and (11) maybe determined empirically. This for example may be achieved using a controlled experiment in which a series of measurements in which the delivery of an airborne pollutant with a certain concentration to the sensor device 10 at a certain airflow speed, e.g. as measured using a flow meter or the like at the inlets 21, 31 of the sensor device 10, is varied in a systematic manner. In such a controlled experiment, the pollutant concentration as determined with the sensor device 10 is compared against a reference determination with a calibrated professional sensor, e.g. a Grimm sensor in case of PM 2.5 particulate matter, and the parameters a, b, c and d may be optimized in order to minimize the discrepancy between the pollutant concentrations as determined with the sensor device 10 and the reference pollutant concentrations as determined with the professional sensor. As the performance of such controlled experiments is well-known per se, this will not be explained in further detail for the sake of brevity only.

This principle is demonstrated in Table 1, which shows the results of such an experiment in which four set PM 2.5 concentrations (20, 50, 100, 160 $\mu$g/m$^3$) are passed through a Grimm No. 1.108 Aerosol Spectrometer and a sensor device 10 according to an embodiment of the present invention (e = 2.39) at four different flow rates.

| | [PM 2.5] ($\mu$g/m$^3$) | | |
|---|---|---|---|
| Flow rate (m/s) | Grimm Spectrometer | Uncalibrated sensor device 10 | calibrated Sensor device 10 |
| 1.62 | 20.8 | 22.4 | 18.3 |
| | 50.2 | 52.9 | 52.6 |
| | 101 | 106 | 112 |
| | 160 | 141 | 151 |
| 3.87 | 20.5 | 29.1 | 19.1 |
| | 49.6 | 69.7 | 52.9 |
| | 102 | 128 | 102 |
| | 160 | 196 | 158 |
| 4.46 | 20.7 | 34.7 | 22.2 |
| | 50.9 | 80.5 | 58.0 |
| | 102 | 145 | 108 |
| | 161 | 222 | 168 |
| 6.22 | 20.8 | 42.1 | 23.6 |
| | 50.3 | 94.3 | 57.8 |
| | 100 | 171.8 | 109 |
| | 161 | 281 | 180 |

As can be seen from Table 1, upon configuration of the calibration function in above equation (13) (calibrated sensor device 10) by extrapolation of the parameters a-d based on the discrepancy between the readings obtained with the Grimm sensor and the uncalibrated sensor device 10, the sensor device 10 is capable of obtaining PM 2.5 concentrations with a good degree of accuracy, with the largest discrepancy between the professional sensor and the sensor device 10 being about 12%, thereby demonstrating that such a calibrated function may be successfully deployed to obtain accurate concentrations of an airborne pollutant without explicit measurement of the respective airflow speeds through the flow channels 20, 30.

Further experiments (not explicitly reported) have demonstrated that in order to achieve an acceptable accuracy with the sensor device 10, the ratio between the area of the first inlet 21 and the second inlet 31 should be more than 1.5 in order to achieve an accuracy of at least 70%, with particularly a good accuracy achieved in excess of about 85% when this ratio is more than 2.25, e.g. more than 2.39. As will be understood by the skilled person, a further increase of this ratio, e.g. to above 3, may further improve the accuracy of the sensor device 10.

This ratio may also be deployed to the first outlet 23 and the second outlet 33, i.e. the area ratio between the first inlet 21 and the second inlet 31 may be the same as the area ratio between the first outlet 23 and the second outlet 33. Preferably, the respective outlets have the same size as the corresponding inlets such that the respective inlets and outlets are interchangeable.

In FIG. 1, the sensor device 10 further comprises a communication module 40 communicatively coupled to the first sensor 22 and the second sensor 32. The communication module 40 is adapted to communicate the sensor readings of the first sensor 22 and the second sensor 32 to an external device 1, which external device 1 maybe configured to store the respective sensor readings and/or to process the respective sensor readings. To this end, the external device 1 may comprise a processor (not shown) adapted to derive the concentration of the airborne pollutant of interest, e.g. a particulate matter concentration such as a PM 2.5 concentration, from the data received from the communication module 40, for example by implementation of the calibrated function as expressed by equation (13) above. As will be readily understood by the skilled person, the external device 1 may store the received sensor readings or the concentration of the airborne pollutant of interest derived from the received sensor readings in a memory or the like, such that a user of the external device 1 and sensor device 10 may obtain a history of determined concentrations of the airborne pollutant of interest, for example to ascertain a trend or development of this concentration over time. This for example may be used by the user to assess the best time of day to exercise, by identifying the period of time during which the concentration of the airborne pollutant of interest has been determined to be the lowest.

Any suitable communication module 40 maybe used for this purpose. For example, the communication module 40 may be a near-field communication module or wireless communication module such as a Wi-Fi module, a Bluetooth module, a module deploying a mobile communication standard such as 3G, 4G or 5G, and so on. The communication module 40 may be communicatively coupled to the external device 1 in any suitable manner such as a P2P manner, via a bridge device such as a router or over a network. The external device 1 may be any suitable electronic device capable of communicating with the communication module 40 in such a manner. For example, the external device 1 may be a portable device such as a smart phone, a tablet computer, a laptop computer or the like or alternatively may be a desktop computer or the like. The external device 1 may be configured by a software program such as an app or the like to implement the processing functionality of the sensor signals of the sensor device 10 as received from the communication module 40, which software program may be downloadable from a service such as an app store providing such software programs.

The embodiment of the sensor device 10 as schematically depicted in FIG. 1 is particularly advantageous when the sensor device 10 is a battery-powered wearable sensor device, such that the sensor device 10 can be kept as compact as possible and exhibits a long battery life due to the fact that the energy-intensive processing of the sensor signals generated by the sensors 22 and 32 is not performed by the sensor device 10 itself.

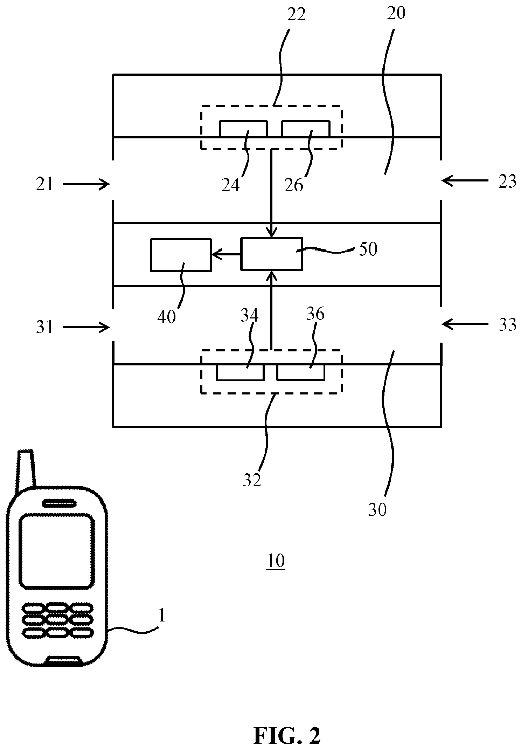

However, in an alternative embodiment as schematically depicted in FIG. 2, the sensor device 10 further comprises a processor 50 arranged to determine the concentration of the airborne pollutant from a first sensor reading provided by the first airborne pollutant sensor 22 and a second sensor reading provided by the second airborne pollutant sensor 32 as previously explained. In this embodiment, the sensor device 10 maybe a wearable sensor device or may form part of an electronic device, e.g. a portable electronic device such as a smart phone, tablet computer, laptop computer or the like. In an embodiment in which the sensor device 10 is a wearable sensor device or the like, the sensor device 10 may further comprise a communication module 40, e.g. a communication module as previously explained, communicatively coupled to the processor 50 and arranged to communicate the determined concentration of the airborne pollutant to an external device 1, e.g. an external device 1 as previously explained. This for example may be desirable if the sensor device 10 is incapable of storing and/or visualizing the determined concentration of the airborne pollutant, in which case the external device 1 may be used to store and/or visualize the determined concentrations of the airborne pollutant, e.g. to facilitate evaluation of trends in the determined pollutant concentrations as previously explained.

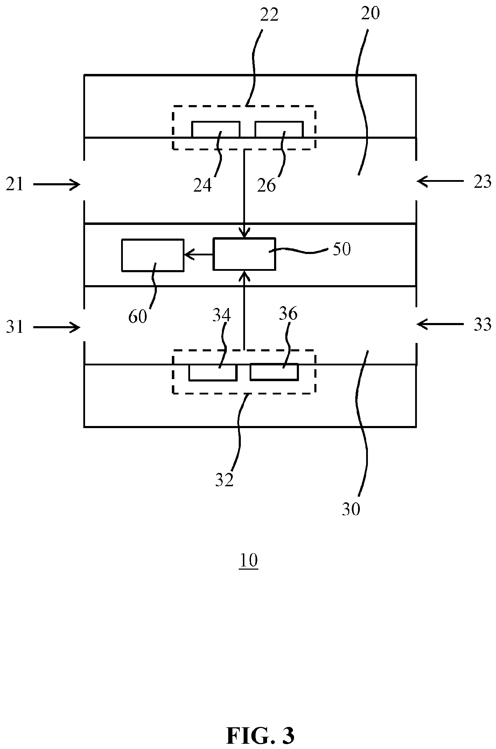

However, in an alternative embodiment as schematically depicted in FIG. 3, the sensor device 10 maybe a self-contained sensor device comprising a processor 50 arranged to determine the concentration of the airborne pollutant from a first sensor reading provided by the first airborne pollutant sensor 22 and a second sensor reading provided by the second airborne pollutant sensor 32 as previously explained and a sensory output device 60 communicatively coupled to the processor 50 for generating a sensory output indicative of the determined concentration of the airborne pollutant. Such a sensory output device for example may be a display such as a touchscreen display or the like. Although not specifically shown, the sensor device 10 may further comprise a data storage device such as a memory or the like for storing the determined airborne pollutant concentrations together with metadata such as place and/or time of the determined concentration to facilitate evaluation of the determined concentrations, e.g. trends, at a later point in time as previously explained. To this end, the sensor device 10 may further comprise a user interface, which may form part of the sensory output device 60, e.g. a touchscreen display, such that a user of the sensor device 10 may invoke an evaluation mode of the concentration data captured with the sensor device 10.

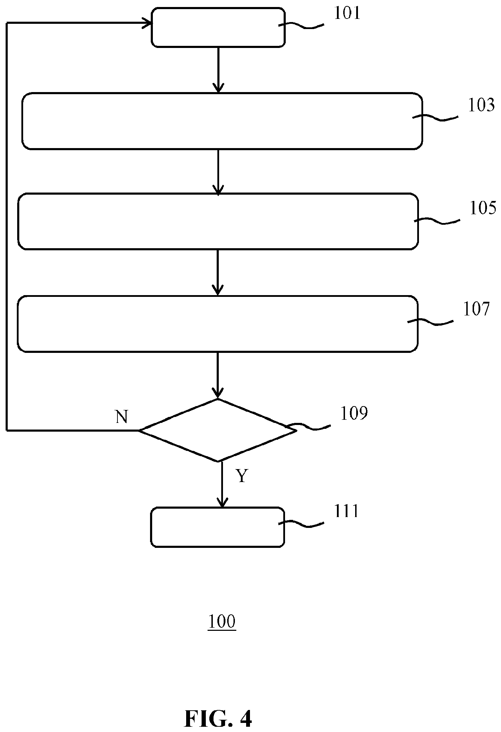

FIG. 4 depicts a flowchart of a method 100 of determining a concentration of an airborne pollutant with the sensor device 10 according to an embodiment of the present invention. The method 100 starts in operation 101 in which a user shakes or otherwise moves the sensor device 10 to generate a first airflow through the first flow channel 20 and a second airflow through the second flow channel 30. This triggers the obtaining of a first sensor reading provided by the first airborne pollutant sensor 22 in the first flow channel 20 in operation 103 and the obtaining of a second sensor reading provided by the second airborne pollutant sensor 32 in the second flow channel 30 in operation 105. As will be understood by the skilled person, operations 103 and 105 are typically performed substantially at the same time in order to ensure that the first sensor reading and the second sensor reading are properly correlated.

The method 100 then proceeds to operation 107 in which the concentration of the airborne pollutant from the first sensor reading and the second sensor reading is determined, for example based on a preconfigured calibration function such as the function expressed by equation (13) as previously explained. This operation may be performed on the sensor device 10 or an external device 1 as previously explained, in which case this operation may further comprise transmitting the respective sensor readings to the external device 1 for processing by the external device 1 as previously explained.

Finally, it is checked in operation 109 if a further concentration of the airborne pollutant needs to be determined. If this is the case, the method 100 may revert back to operation 101 in which the user shakes the sensor device 10 again. Otherwise, the method 100 may terminate in 111.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. A sensor device (10) for determining a concentration of an airborne pollutant, comprising:

   a first flow channel (20) having a first inlet (21) and a first outlet (23);
   a first airborne pollutant sensor (22) in the first flow channel;
   a second flow channel (30) having a second inlet (31) and a second outlet (33);
   a second airborne pollutant sensor (32) in the second flow channel;
   wherein the first inlet has a first area and the second inlet has a second area, and wherein a ratio between the first area and the second area is larger than 1.5.

2. The sensor device (10) of claim 1, wherein the ratio is larger than 3.

3. The sensor device (10) of claim 1 or 2, wherein the first outlet (23) has a first further area and the second outlet (33) has a second further area, wherein the ratio between the first area and the second area is the same as a further ratio between the first further area and the second further area.

4. The sensor device (10) of claim 3, wherein the first outlet (23) has the same area as the first inlet (21).

5. The sensor device (10) of any of claims 1-4, further comprising a processor (50) communicatively coupled to the first airborne pollutant sensor (22) and the second airborne pollutant sensor (32), the processor being arranged to determine a concentration of the airborne pollutant from a first sensor reading provided by the first airborne pollutant sensor and a second sensor reading provided by the second airborne pollutant sensor.

6. The sensor device (10) of claim 5, wherein the processor (50) is arranged to determine the concentration of the airborne pollutant based on a preconfigured calibration function.

7. The sensor device (10) of claim 5 or 6, further comprising a communication module (40) communicatively coupled to the processor (50) and arranged to communicate the determined concentration of the airborne pollutant to an external device (1).

8. The sensor device (10) of any of claims 1-4, further comprising a communication module (40) communicatively coupled to the first airborne pollutant sensor (22) and the second airborne pollutant sensor (32), the communication module being arranged to communicate a first sensor reading provided by the first airborne pollutant sensor and a second sensor reading provided by the second airborne pollutant sensor to an external device (1) comprising a processor for determining a concentration of the airborne pollutant from the first sensor reading and the second sensor reading.

9. The sensor device (10) of any of 1-8, wherein the sensor device is a particulate matter sensor.

10. The sensor device (10) of claim 9, wherein the first airborne pollutant sensor (22) and the second airborne pollutant sensor (32) are optical sensors.

11. The sensor device (10) of any of claims 1-10, wherein the sensor device is a wearable sensor.

12. The sensor device (10) of any of claims 1-11, wherein the sensor device does not contain a fan for regulating an airflow speed through the first flow channel (20) or the second flow channel (30) or an accelerometer or a flow meter for determining said airflow speed.

13. A method (100) of determining a concentration of an airborne pollutant with the sensor device of any of claims 1-12, the method comprising:

shaking the sensor device to generate a first airflow through the first flow channel (20) and a second airflow through the second flow channel (30);
obtaining a first sensor reading provided by the first airborne pollutant sensor (22) in the first flow channel;
obtaining a second sensor reading provided by the second airborne pollutant sensor (32) in the second flow channel; and
determining a concentration of the airborne pollutant from the first sensor reading and the second sensor reading.

14. The method (100) of claim 13, further comprising communicating the first sensor reading and the second sensor reading to an external device (1), and determining the concentration of the airborne pollutant from the first sensor reading and the second sensor reading on said external device.

15. The method (100) of claim 13 or 14, wherein determining the concentration of the airborne pollutant from the first sensor reading and the second sensor reading comprises determining the concentration of the airborne pollutant based on a preconfigured calibration function.

**FIG. 1**

FIG. 2

FIG. 3

101

103

105

107

N ◇ 109

Y

111

100

**FIG. 4**

Europäisches
Patentamt

European
Patent Office

Office européen
des brevets

# EUROPEAN SEARCH REPORT

Application Number

EP 17 16 3753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 937 680 A1 (AEROSOL D O O [SI]) 28 October 2015 (2015-10-28) | 1-11 | INV. G01N1/22 G01N15/06 |
| Y | * paragraph [0021] - paragraph [0031] * * figure 1 * | 12-15 | |
| Y | CN 105 823 714 A (WUHAN CUBIC OPTOELECTRONICS CO LTD) 3 August 2016 (2016-08-03) * the whole document * | 12-15 | ADD. G01N15/00 |
| A,D | US 2016/025628 A1 (KIM JONGSEOK [KR] ET AL) 28 January 2016 (2016-01-28) * the whole document * | 1-15 | |

TECHNICAL FIELDS
SEARCHED (IPC)

G01N

The present search report has been drawn up for all claims

| Place of search | Date of completion of the search | Examiner |
|---|---|---|
| The Hague | 1 September 2017 | Liefrink, Feike |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 3753

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2017

| Patent document cited in search report | | Publication date | Patent family member(s) | | Publication date |
|---|---|---|---|---|---|
| EP 2937680 | A1 | 28-10-2015 | EP<br>US | 2937680 A1<br>2016313229 A1 | 28-10-2015<br>27-10-2016 |
| CN 105823714 | A | 03-08-2016 | NONE | | |
| US 2016025628 | A1 | 28-01-2016 | KR<br>US | 20160012565 A<br>2016025628 A1 | 03-02-2016<br>28-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008145353 A
- CN 104089858 A
- CN 203551443 U
- CN 203824872 U
- CN 105021501 A
- US 20160025628 A1